# FASCICULE DE BREVET EUROPEEN

(11) **EP 1 245 581 B1**
(45) Date de publication et mention de la délivrance du brevet: **09.05.2007**
(21) Numéro de dépôt: 02290759.6
(22) Date de dépôt: 27.03.2002
(51) Int. Cl.: C08B 30/18, A23L 1/09, A23L 1/308, A23L 2/52, A23L 1/29, A21D 2/18, A23G 3/00, A23L 1/164, A23C 9/154, A23L 1/24, A23G 9/32, A23G 9/52, A21D 13/06, A23G 1/00

(54) **Procédè de préparation d'un aliment hypocalorique**
Verfahren zur Herstellung eines kalorienarmen Lebensmittels
Process for preparing a low calorie foodstuff

(30) Priorité: 30.03.2001 FR 0104415
(43) Date de publication de la demande: 02.10.2002
(73) Titulaire: Roquette Frères, 62136 Lestrem (FR)
(72) Inventeur: Brendel, Raymond, 62400 Bethune (FR); Boursier, Bernard, 62138 Violaines (FR); Leroux, Patrick, 59940 Estaires (AL) (FR)
(74) Mandataire: Boulinguiez, Didier

(56) Documents cités:
- EP-A- 1 006 128
- WO-A-95/02969
- US-A- 5 258 199
- US-A- 5 466 471
- US-A- 6 048 541

## Description

La présente invention a pour objet un procédé de préparation d'un aliment à valeur calorique réduite utilisant un saccharide particulier comme substitut de matières caloriques. Elle a également pour objet des aliments hypocaloriques contenant un tel saccharide particulier.

De manière générale, on observe aujourd'hui dans les pays industrialisés, une préoccupation croissante des consommateurs pour la nutrition et les bienfaits potentiels des aliments. Plusieurs raisons peuvent être avancées :
- la fréquence inquiétante des cancers et maladies coronariennes et la vulgarisation des connaissances nutritionnelles récentes,
- la méfiance des consommateurs suite aux récentes crises de l'industrie agroalimentaire,
- l'évolution démographique actuelle, qui voit s'accroître la tranche d'âge des 45-65 ans, accentue cette attente des produits sains, qui permettent de vivre mieux et plus longtemps.

C'est pourquoi, depuis quelques années, des efforts importants ont été faits pour remplacer dans les aliments traditionnels les matières caloriques. Parmi celles-ci, les plus coûteuses et les plus caloriques sont bien souvent le saccharose et les matières grasses.

Le saccharose est depuis les débuts de l'industrie alimentaire la charge sucrante de référence. Ses propriétés sensorielles et technologiques le rendent particulièrement adapté aux produits alimentaires.

En revanche, ses propriétés nutritionnelles peuvent donner lieu à des critiques. En effet, le saccharose possède une valeur calorique de 4 Kcal/g, ce qui confère au produit alimentaire dont le saccharose est le constituant essentiel, une valeur calorique non négligeable.

En outre, il est connu que le saccharose est tout à fait contre-indiqué pour les diabétiques car le glucose qui le constitue est rapidement assimilable par l'organisme, ce qui peut générer de graves hyperglycémies chez ces malades. Enfin, le saccharose est un substrat fermentescible par les bactéries commensales de la bouche, qui le transforment en acides corrosifs à l'origine des caries dentaires.

Pour pallier ces inconvénients, il a été imaginé par exemple dans les documents EP-A-0 390 299 et EP-A-0 512 910, de substituer le saccharose par des polyols dans certains produits alimentaires. Ces polyols peuvent notamment être des monosaccharides hydrogénés tels que le sorbitol, le mannitol, le xylitol, l'érythritol ou des disaccharides hydrogénés tels que le maltitol, le lactitol, l'isomaltulose hydrogéné (mélange équimoléculaire de glucopyranosyl-1,6 sorbitol et de glucopyranosyl-1,1 mannitol).

A l'état pur, ces polyols n'ont pas de pouvoir réducteur et ne sont pas fermentés par la flore buccale en acides. Ils permettent donc la fabrication de produits alimentaires non cariogènes dans la mesure où les autres ingrédients de la formulation n'apportent pas de sucres fermentescibles. En outre, les polyols sont lentement métabolisés et n'entraînent pas après leur consommation une élévation brutale du taux de glucose dans le sang. En conséquence, ils sont souvent recommandés dans l'alimentation des diabétiques.

De plus, la valeur calorique est estimée en moyenne à 2,4 Kcal/g (10,0 KJ/g) soit environ 60% de celle du sucre. Cependant, en ce qui concerne l'allégement calorique, on ne peut que constater que celui-ci reste encore limité pour les aliments intégrant des polyols commercialisés actuellement, et ce pour la simple raison qu'à la valeur calorique de la charge édulcorante s'ajoute celle, beaucoup plus importante, des matières grasses qui constituent généralement un autre ingrédient essentiel des produits alimentaires.

Ces matières grasses se présentent généralement sous forme de triglycérides. Leur valeur calorique s'élève à 9 Kcal/g. De plus, elles sont essentiellement sous forme saturée. Elles ne sont donc pas particulièrement recommandées par les nutritionnistes et vont à l'encontre du souci actuel des consommateurs, qui est de limiter l'apport excessif de calories par l'alimentation.

Pour répondre à ce souci, il conviendrait donc de remplacer tout ou partie du saccharose par un substitut faiblement calorique, mais également de réduire tout ou partie de la quantité de matières grasses.

Faisant le constat de cet état de la technique, la société demanderesse s'est donnée comme objectif la mise au point d'un aliment à valeur calorique réduite, qui bien que présentant des teneurs réduites en saccharose, matières grasses et autres matières caloriques, présenterait des propriétés technologiques et organoleptiques comparables à celles du même aliment traditionnel.

Par propriétés technologiques comparables, on entend aussi bien les propriétés de l'aliment obtenu que la possibilité d'avoir recours pour sa fabrication à une technologie classique. Le but recherché est en fait de s'affranchir, dans toute la mesure du possible, d'une part des contraintes de mise en oeuvre que peuvent être une ambiance conditionnée, un matériel sophistiqué ou une durée de fabrication longue, et d'autres part des difficultés techniques telles que la reprise en eau, le comportement rhéologique médiocre, ou la limitation de certains paramètres du procédé de fabrication de l'aliment.

Et c'est après de nombreux essais et études, que la société demanderesse a eu le mérite de trouver que l'objectif défini ci-dessus pouvait être atteint à la condition d'utiliser pour la constitution de tout ou partie des matières caloriques utilisées dans des aliments, une maltodextrine branchée présentant des paramètres analytiques bien particuliers.

La présente invention a donc pour objet un procédé de préparation d'un aliment à valeur calorique réduite, caractérisé par le fait qu'il comprend l'étape consistant à remplacer en partie, au plus 50% en poids, les matières passes de l'aliment par une quantité efficace quant à la réduction de la valeur calorique, de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole.

Par maltodextrines branchées on entend au sens de la présente invention les maltodextrines branchées décrites dans la demande de brevet EP-A- 1.006.128 dont la société demanderesse est titulaire. Ces maltodextrines branchées présentent un caractère d'indigestibilité qui a pour conséquence de diminuer leur pouvoir calorique, en empêchant leur assimilation au niveau de l'intestin grêle. Leur faible teneur en molécules de faible degré de polymérisation (« DP ») contribue également à leur faible caloricité. La détermination du pouvoir calorique des maltodextrines branchées est effectuée par calcul, à partir de l'évaluation de la part représentée par la fraction indigestible dans l'intestin grêle et fermentée dans le gros intestin, considérée ici comme apportant 2Kcal/g. Les maltodextrines branchées ont ainsi une valeur calorique déduite inférieure à 2,5 Kcal/g. Leur teneur élevée en liaisons glucosidiques 1→6 a pour conséquence d'abaisser leur pouvoir cariogène en réduisant leur assimilation par les micro-organismes de la cavité buccale. Ce taux élevé en liaisons 1→6 leur confère également des propriétés prébiotiques tout à fait particulières : il est en effet apparu que les bactéries du caecum et du colon de l'homme et des animaux, telles que les bactéries butyrogènes, lactiques ou propioniques métabolisent des composés hautement branchés. D'autre part, ces maltodextrines branchées favorisent le développement des bactéries bifidogènes au détriment des bactéries indésirables. Il en résulte des propriétés tout à fait bénéfiques pour la santé du consommateur.

Dans la présente invention, on entend par « quantité efficace quant à la réduction de la valeur calorique » une quantité de maltodextrines branchées suffisante pour substituer tout ou partie des matières caloriques d'un aliment et d'en diminuer ainsi la valeur calorique, comparativement à la valeur calorique d'un aliment ne comprenant pas de telles maltodextrines branchées.

Les matières caloriques pouvant être substituées par les maltodextrines branchées comprennent au moins un élément choisi dans le groupe constitué par le saccharose, le dextrose, le lactose, les sirops de glucose, les maltodextrines, les matières grasses, la gélatine, les protéines de lait, la gomme arabique.

Dans la présente invention, par « maltodextrines » on entend les maltodextrines standards obtenues classiquement par hydrolyse acide et/ou enzymatique de l'amidon, et caractérisées par un pouvoir réducteur exprimé en Dextrose Equivalent (ou DE) inférieur à 20.

Avantageusement, les maltodextrines branchées mises en oeuvre dans la présente invention présentent une teneur en sucres réducteurs comprise entre 2 et 5% et un Mn compris entre 2000 et 3000 g/mole et tout ou partie de celles-ci peuvent hydrogénées.

En fonction du type d'aliment et des qualités organoleptiques recherchées, les maltodextrines branchées sont présentes dans l'aliment en une proportion de 0,1 à 30% en poids et de préférence 1,0 à 10% en poids, par rapport au poids total de l'aliment.

A ces maltodextrines branchées peut être associé conjointement 0,5 à 98% en poids, et de préférence 5 à 98% en poids par rapport au poids total de l'aliment, d'au moins un polyol choisi dans le groupe constitué par le sorbitol, le maltitol, le xylitol, le mannitol, l'érythritol le lactitol, l'isomaltulose hydrogéné, les sirops de glucose hydrogénés et les hydrolysats d'amidons hydrogénés.

Selon une autre variante du procédé conforme à la présente invention les maltodextrines branchées sont présentes conjointement avec 0,5 à 98% en poids, et de préférence 5 à 98% en poids par rapport au poids total de l'aliment, d'au moins un sucre choisi dans le groupe constitué par le xylose, le fructose, le glucose, le polydextrose, le saccharose, le maltose, le lactose, l'isomaltose, les isomaltooligosaccharides, l'isomaltulose, les sirops de glucose, les sirops de glucose riches en fructose, les maltodextrines, les fructooligosaccharides et les galactooligosaccharides.

Dans le procédé conforme à la présente invention, il est également possible d'ajouter un édulcorant intense choisi dans le groupe constitué, par exemple, de l'aspartame, de l'alitame, de l'acésulfame K, du sucralose, du stévioside, de la saccharine et du cyclamate, seuls ou en mélange. De préférence, ledit édulcorant intense est présent en une quantité de 0,01 à 5% en poids, par rapport au poids total de l'aliment.

Les aliments dans lesquels tout ou partie de la matière calorique peut être substituée par des maltodextrines branchées, hydrogénées ou non et éventuellement en combinaison avec un ou des polyols et/ou un ou des sucres sont par exemple les biscuits, le chocolat, les confiseries telles que sucres cuits, gélifiés, pâtes à mâcher, chewing gums, comprimés, gommes, lozenges, confiseries de chocolat, barres chocolatées, les boissons, les substituts de repas, les crèmes glacées, les pâtes à tartiner, les gâteaux, les produits de panification, les assaisonnements de salade et les autres aliments renfermant habituellement des matières caloriques.

La présente invention concerne un aliment à valeur calorique réduite, dans lequel une partie, au plus 50% en poids, des matières grasses est remplacée par des maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, ledit aliment ayant des propriétés technologiques et organoleptiques comparables à un aliment traditionnel.

La présente invention concerne encore un aliment à valeur calorique réduite, dans lequel en outre au plus 75% en poids des carbohydrates et/ou tout ou partie des protéines sont remplacés par des maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, ledit aliment ayant des propriétés technologiques et organoleptiques comparables à un aliment traditionnel.

Les sucres pouvant ainsi être substitués sont par exemple le saccharose, le dextrose, le lactose, le maltose, le fructose, les sirops de glucose, les maltodextrines.

Ainsi, par exemple, d'excellents résultats ont été obtenus avec des biscuits.

Les phénomènes qui se produisent dans un biscuit lors de son élaboration, aussi bien pendant les étapes de mélange que celles de cuisson, sont nombreux et complexes. Ils sont étroitement dépendants de la proportion des différents ingrédients.

La farine constitue bien sûr la base du biscuit, en apportant de l'amidon qui reste pour une grande partie à l'état de granules (étant donné la faible teneur en eau) et les protéines (gluten) qui assurent la formation de la matrice. La matière grasse, associée à un émulsifiant, forme une dispersion dans toute la pâte, jouant un rôle de liant entre les autres ingrédients. Cette dispersion est responsable de la formation des sites de nucléation pour les futures cellules d'air. D'autre part, les lipides s'adsorbent à la surface des bulles et les stabilisent au cours de leur croissance. La matière grasse est donc déterminante pour la texture et la saveur des biscuits, puisqu'elle exhauste aussi les arômes. Le sucre, lui, influence surtout les propriétés mécaniques du biscuit (en dehors bien évidemment de son rôle organoleptique). La granulométrie des cristaux et la proportion de sucre cristallin et vitreux sont des facteurs influents par rapport aux caractéristiques de tendreté, de croustillance et de plasticité. Enfin, le saccharose à l'état vitreux a une affinité pour l'eau supérieure à celle du saccharose cristallin. La proportion de saccharose dans la recette joue donc sur la teneur en eau libre, et par conséquent, sur les propriétés mécaniques du biscuit.

Après de longs essais, la société demanderesse a obtenu d'excellents résultats avec un biscuit à valeur calorique réduite, dans lequel au plus 40% en poids des sucres et/ou au plus 40% en poids des matières grasses sont remplacés par des maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, ledit biscuit ayant des propriétés technologiques et organoleptiques comparables à un biscuit traditionnel.

Au-delà de 40% de substitution des sucres, la saveur sucrée du biscuit n'est plus maintenue. Dans le cas de la matière grasse, une substitution au-delà de 40% engendre une dégradation des propriétés de la pâte et notamment ses qualités technologiques (la pâte bloque la rotative qui permet de former les biscuits).

D'autres caractéristiques et avantages de la présente invention apparaîtront clairement à la lecture des exemples qui suivent, donnés à titre illustratif et non limitatif.

### Exemple 1 : biscuit

On prépare des biscuits traditionnels et des biscuits contenant d'une part des maltodextrines branchées et d'autre part des FOS (fructooligosaccharides). Ces derniers produits sont commercialisés sous la dénomination ACTILIGHT ou RAFTILOSE.

Quantités pour 100 g de pâte :

| Ingrédient (poids en grammes) | Référence | Biscuit selon l'invention | Biscuit au FOS |
|---|---|---|---|
| Farine | 55,8 | 55,8 | 55,8 |
| Matière grasse | 15,9 | 12,4 | 12,4 |
| Saccharose | 17,8 | 15,1 | 15,1 |
| Maltodextrines branchées | 0 | 6,2 | 0 |
| FOS | 0 | 0 | 6,2 |
| Eau | 9,3 | 9,3 | 9,3 |
| Bicarbonate d'ammonium | 0,3 | 0,3 | 0,3 |
| Bicarbonate de soude | 0,2 | 0,2 | 0,2 |
| Pyrophosphate de soude | 0,2 | 0,2 | 0,2 |
| Sel | 0,3 | 0,3 | 0,3 |
| Vanille | 0,1 | 0,1 | 0,1 |
| Lécithine | 0,1 | 0,1 | 0,1 |

### Mode opératoire :

- Peser l'eau, le bicarbonate d'ammonium et le bicarbonate de soude. Mélanger pendant 5 minutes dans un pétrin Hobart à vitesse 1.
- Ajouter la matière grasse et la lécithine de soja, et agiter une minute à vitesse 1, puis 4 minutes à vitesse 2.
- Peser le reste des poudres (farine, saccharose, pyrophosphate acide de soude, sel et arôme vanille). Les mélanger, puis les ajouter dans le pétrin. Agiter 10 minutes à vitesse 1, avec une interruption pour racler les bords du pétrin et la pale d'agitation.
- Former les biscuits à la mouleuse rotative, et les disposer sur une plaque de cuisson.
- Porter au four rotatif à 200°C pendant 10 minutes. Les biscuits sont toujours placés dans le four à la même hauteur.
- Laisser refroidir à 25°C, puis stocker les biscuits en conserve, afin de préserver leurs caractéristiques, de teneur en eau notamment.

### Résultats des mesures instrumentales :

| Recette | Référence | Biscuit selon l'invention | Biscuit au FOS |
|---|---|---|---|
| Activité de l'eau | 0,205 | 0,223 | 0,133 |
| Teneur en eau (Karl Fisher) | 4,3% | 4,4% | 3,4% |
| Friabilité* | 23.3 | 23.3 | 23 |

| | | | |
|---|---|---|---|
| * la friabilité est mesurée au moyen d'un appareil de type Instron. Un poinçon conique est appliqué sur la surface du biscuit, de façon à ce qu'un léger contact soit établi. L'appareil impose alors une déformation croissante, et mesure la force exercée. Lorsque le poinçon s'enfonce dans le biscuit, la force exercée augmente progressivement. Si le poinçon rencontre un espace d'air, une diminution brutale de cette force se produit au moment de la rupture de la paroi. La friabilité peut donc être estimée par le nombre de pics dans l'évolution de la force exercée. | | | |

Pour cette étude, nous n'avons compté que les pics entre 0 et 2mm de déplacement pour ne pas atteindre la rupture du biscuit.

### Résultats de l'analyse sensorielle : panel de 12 sujets

Les notes correspondent à une évaluation sur une échelle de 0 à 7 pour l'aspect, la couleur et le sucre.

La valeur calorique des biscuits est calculée à l'aide des valeurs caloriques de chaque ingrédient.

Pour les maltodextrines branchées, on utilisera une valeur calorique calculée de 2 Kcal/g.

Pour les FOS, la valeur calorique est de 2 Kcal/g.

| Recette | Référence | Biscuit selon l'invention | Biscuit au FOS |
|---|---|---|---|
| Aspect | 4,815 | 3,285 | 2,715 |
| Couleur | 5,7 | 4,425 | 2,85 |
| Sucre | 3,80 | 3,08 | 3,89 |
| Valeur calorique (Kcal/100g) | 464 | 429 | 429 |

Ces résultats montrent que les biscuits selon l'invention sont préférés aux autres biscuits à valeur calorique réduite.

### Exemple 2 : barres céréalières

On prépare des barres céréalières avec sirop de glucose (témoin) ou en substituant une partie de ce sirop par des maltodextrines branchées de manière à réduire la valeur calorique des barres.

### Recette du caramel liant

| | **TEMOIN** | | **ESSAI SELON L'INVENTION** | |
|---|---|---|---|---|
| | INGREDIENTS MIS EN OEUVRE (en poids) | COMPOSITION DU PRODUIT FINI (%) | INGREDIENTS MIS EN OEUVRE (en poids) | COMPOSITION DU PRODUIT FINI (%) |
| Lait en poudre | 101 | 10,6 | 101 | 10 |
| Saccharose | 300 | 33,5 | 300 | 32 |
| Maltodextrin es branchées | - | - | 126 | 12.7 |
| NaCl | 4 | 0,4 | 4 | 0.4 |
| Eau | 83 | - | 40 | |
| NEOSORB 70/70* | 100 | 7,8 | 118 | 8.8 |
| FLOLYS E7081S* | 233 | 21,1 | 132 | 11 |
| M.G.V.** COSE | 174 | 19,4 | 174 | 18 |
| Lécithine de soja | 5 | 0 , 6 | 5 | 0.5 |
| Humidité résiduelle | - | 6,5 | - | 6.6 |
| Total | 1000 | 100 | 1000 | 100 |

| | | | | |
|---|---|---|---|---|
| * Commercialisé par la Demanderesse ** Matière grasse végétale | | | | |

### Mode opératoire

➢ Mélanger le lait entier en poudre avec le saccharose (M1)
➢ Mélanger l'eau, le NEOSORB 70/70 et le FLOLYS E7081S (M2)
➢ Mélanger la matière grasse végétale (préalablement fondue à 50°C), la lécithine et les maltodextrines branchées (M3)
➢ Sous agitation ajouter le mélange M1 au mélange M2 puis cuire à feu doux jusqu'à 110°C
➢ Lorsque la température de 110°C est atteinte, verser progressivement le mélange M3
➢ Une chute de température (5°C environ) et une augmentation de la viscosité du mélange final sont alors observées.
➢ Toujours à feu doux et en agitant fortement cuire le mélange final jusqu'à 126°C pour le témoin et 110°C pour l'essai selon l'invention.
➢ Mélanger le caramel aux céréales en respectant les proportions prescrites (75/25).
➢ Couler sur marbre
➢ Refroidir, découper, envelopper.

### Caractérisation des caramels

| | **Aw à 20°C** | **Teneur en eau (%)** | **Valeur calorique (Kcal/100g)** |
|---|---|---|---|
| Caramel témoin | 0,45 | 6,5% | 470 |
| Caramel selon l'invention | 0,46 | 6,6% | 435 |

| | | | |
|---|---|---|---|
| Valeurs caloriques utilisées pour les calculs : Maltodextrines branchées : 2 Kcal/g Saccharose, FLOLYS E 70 : 4 Kcal/g NEOSORB 70/70 : 2,4 Kcal/g Lécithine, MGV : 9 Kcal/g Lait en poudre : 5 Kcal/g | | | |

La réduction de la valeur calorique des caramels liants selon l'invention est de 7%.

### Exemple 3 : préparation de boissons gazeuses sans alcool.

On prépare des boissons gazeuses sans alcool contenant d'une part du saccharose, et d'autre part un sirop de glucose et des maltodextrines branchées en tant que substitut total du saccharose.

### Quantités en grammes pour 1 litre de boisson :

| | **Témoin (saccharose)** | **Essai 1 (sirop de glucose)** | **Essai 2 (selon l'invention)** |
|---|---|---|---|
| **Saccharose** | 100 | | |
| **Sirop de glucose** | | 86,42 | |
| **Maltodextrines branchées** | | | 73 , 68 |
| **Aspartame** | | 0,078 | 0,118 |
| **Acésulfame K** | | 0,078 | 0,118 |
| **Arôme citron** | 0,7 | 0,7 | 0,7 |
| **Acide citrique (sec)** | 1 , 9 | 1 , 9 | 1 , 9 |
| **Benzoate de sodium (sec)** | 0,09 | 0,09 | 0,09 |
| **Eau carbonatée à 4°C** | qsp 11 | qsp 11 | qsp 11 |

| | | | |
|---|---|---|---|
| Saccharose : sucre semoule tamisé (BEGHIN-SAY) Sirop de glucose : FLOLYS^{®}E7081S Aspartame : NUTRASWEET Acesulfame K : HOESCHT Arôme citron : AG 31711 (QUEST) | | | |

Les maltodextrines branchées présentent entre 15 et 35% de liaisons glucosidiques 1→6, une teneur en sucres réducteurs comprise entre 2 et 5%, un indice de polymolécularité inférieur à 5 et une masse moléculaire moyenne en nombre Mn comprise entre 2000 et 3000 g/mole :

| | |
|---|---|
| Sucres réducteurs | 2,3 |
| Mn (g/mole) | 2480 |
| Mw (g/mole) | 5160 |
| Liaison 1,2 (%) | 10 |
| Liaison 1,3 (%) | 12 |
| Liaison 1,4 (%) | 49 |
| Liaison 1,6 (%) | 29 |

On prépare 0,5 litres d'eau gazéifiée. On ajoute ensuite les édulcorants et/ou le sucre ou substitut de sucre. On incorpore ensuite le reste des ingrédients et on ajoute de l'eau jusqu'à un volume de 1 litre. Les boissons obtenues sont conservées au réfrigérateur, avant soumission à un panel de dégustation.

Un jury de 8 personnes effectue une évaluation sur les trois boissons des critères suivants :
- saveur sucrée
- intensité aromatique
- viscosité en bouche
- préférence

Chaque critère est classé sur une échelle de 1 à 5 en comparaison avec le témoin saccharose.

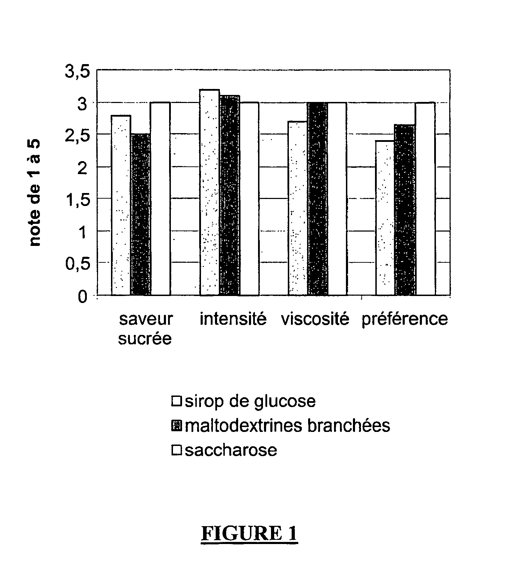

Les résultats sont représentés en figure 1. On constate qu'aucune différence significative n'apparaît entre les trois boissons. Il semble que les boissons selon l'invention soient toutefois préférées à celles incluant le sirop de glucose en tant que substitut du saccharose.

La substitution du sucre ou du sirop de glucose par les maltodextrines branchées selon l'invention permet donc de réduire leur valeur calorique sans altérer leur goût. En effet, la valeur calorique des trois boissons est la suivante :
- Témoin (saccharose) : 400 Kcal/l
- ESSAI 1 (sirop de glucose) : 280 Kcal/l
- ESSAI 2 (invention) : 140 Kcal/l

### Exemple 4 : préparation d'une mayonnaise.

On prépare une mayonnaise standard à 77.5% d'huile et une mayonnaise allégée à 25% d'huile comprenant des taux croissants de maltodextrines branchées en tant que substitut de la matière grasse.

Les formules sont les suivantes :

| | **MAYONNAISE STANDARD** | **MAYONNAISE 1 SELON L'INVENTION** | **MAYONNAISE 2 SELON L'INVENTION** | **MAYONNAISE 3 SELON L'INVENTION** |
|---|---|---|---|---|
| **HUILE DE MAIS** | 77.5 | 25 | 25 | 25 |
| **AMIDON PREGEFLO^{®} CH20** | 0.5 | 4.25 | 4.25 | 4.25 |
| **SEL** | 2 | 2 | 2 | 2 |
| **MOUTARDE** | 3 | 3 | 3 | 3 |
| **JAUNE D'OEUFS** | 5 | 5 | 5 | 5 |
| **VINAIGRE 6°** | 10 | 10 | 10 | 10 |
| **SACCHAROSE** | 2 | 2 | 2 | 2 |
| **MALTODEXTRIN ES BRANCHEES** | 0 | 0 | 5 | 10 |
| **EAU** | - | 48.75 | 43.75 | 38.75 |

Mode opératoire : dans le bol d'un mixer KENWOOD, on mélange l'eau et les maltodextrines branchées le cas échéant. On ajoute ensuite successivement le sel, le sucre, le vinaigre, la moutarde et les jaunes d'oeufs.

On agite à la vitesse maximale du mixer. On introduit ensuite la moitié de l'huile, puis l'autre moitié comportant l'amidon dispersé.

On mélange pendant 2 minutes et on met en pots.

Résultats : le témoin sans maltodextrines branchées présente peu de corps. Avec 5% de maltodextrines branchées, la mayonnaise a plus de corps et un aspect plus gras. Avec 10% de maltodextrines branchées, la mayonnaise est comparable à la mayonnaise standard, avec beaucoup de corps et un aspect très gras.

Les maltodextrines branchées selon l'invention sont donc tout à fait adaptées à la préparation de mayonnaises allégées en matières grasses.

### Exemple 5 : substitution de matières grasses dans une barre céréalière.

On prépare des barres céréalières selon le même mode opératoire que dans l'exemple 2, mais avec une recette de caramel liant dans laquelle on substitue une partie des matières grasses par les maltodextrines branchées selon l'invention.

### Formulé :

| | **Barre témoin** | **Barre selon l'invention** |
|---|---|---|
| Ingrédients mis en oeuvre dans le liant | (% massique) | |
| Matière grasse végétale (Cose de Loders Croklaan) | 16,90 | 12,90 |
| Lécithine de soja | 1,50 | 1,50 |
| Maltodextrines branchées | 0 | 4,22 |
| Poudre de lait entier (Ingredia) | 10 | 10 |
| Saccharose | 25 | 25 |
| NaCl | 0,4 | 0,4 |
| Eau | 9 | 8,79 |
| Sirop de glucose (FLOLYS^{®}E7081S) | 37,20 | 37,20 |
| TOTAL | 100 | 100 |
| Valeur calorique (sur sec) | 435 Kcal / 100g | 426 Kcal / 100g |

Observations : aucune différence significative en termes d'aspect et de goût n'ont été observées entre le témoin et les barres selon l'invention, si ce n'est que les barres selon l'invention ont été trouvées plus croustillantes que le témoin : il est donc possible de substituer la matière grasse du témoin sans nuire à la qualité finale des barres. On peut tout à fait envisager dans le cadre de la présente invention de substituer plusieurs ingrédients à la fois, c'est à dire tout ou partie du sucre et de la matière grasse.

### Exemple 6 : préparation de pain.

On prépare un pain traditionnel dans lequel une fraction de la farine est remplacée par des maltodextrines branchées.

### Formule :

| | TEMOIN (composition en poids) | COMPOSITION SELON L'INVENTION (composition en poids) |
|---|---|---|
| FARINE DE BLE | 100 | 93.5 |
| MALTODEXTRINES BRANCHEES | 0 | 6.5 |
| MATIERES GRASSES CONCRETES | 4 | 4 |
| GLUTEN DE BLE | 1 | 1 |
| FARINE DE MALT | 0.1 | 0.1 |
| SEL | 2.3 | 2.3 |
| LEVURE FRAICHE | 2.5 | 2.5 |
| AMYLASES | 0.013 | 0.013 |
| ACIDE ASCORBIQUE (solution à 1%) | 0.3 | 0.3 |
| EAU | 60 | 60 |

Mode opératoire : on fait fondre la matière grasse et on ajoute (selon l'invention) les maltodextrines branchées sous agitation puis on place au froid pour faire durcir la matière grasse. On introduit ensuite les différentes ingrédients dans un pétrin. Le mélange est pétri pendant 4 minutes à la vitesse 1 puis 19 minutes à la vitesse 2.

La pâte obtenue est placée en étuve à 23°C et 80% d'humidité relative pendant 45 minutes. Elle est ensuite découpée, pesée, façonnée, puis placée en étuve à 23°C et 80% d'humidité relative pendant 1h30 à 1h45.

La pâte est ensuite cuite au four à 250°C pendant 20 à 30 minutes.

On obtient selon l'invention un pain bien blanc de bonne qualité organoleptique.

## Revendications

1. Procédé de préparation d'un aliment à valeur calorique réduite, **caractérisé par le fait qu'**il comprend l'étape consistant à remplacer en partie, au plus 50% en poids, les matières grasses de l'aliment par une quantité efficace quant à la réduction de la valeur calorique, de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole.

2. Procédé selon la revendication 1 **caractérisé par le fait qu'**il comprend, en outre, l'étape consistant à remplacer en partie, au plus 75% en poids, les sucres et/ou tout ou partie des protéines de l'aliment par une quantité efficace quant à la réduction de la valeur calorique, de maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole.

3. Procédé selon la revendication 1 ou 2, **caractérisé par le fait que** lesdites maltodextrines branchées présentent une teneur en sucres réducteurs comprise entre 2 et 5% et un Mn compris entre 2000 et 3000 g/mole.

4. Procédé selon l'une quelconque des revendications 1 à 3, **caractérisé par le fait que** tout ou partie des maltodextrines branchées sont hydrogénées.

5. Procédé selon l'une quelconque des revendications 1 à 3, **caractérisé par le fait que** lesdites maltodextrines branchées sont présentes en une proportion de 0,1 à 30% en poids et de préférence 1,0 à 10% en poids, par rapport au poids total de l'aliment.

6. Procédé selon l'une quelconque des revendications 1 à 5, **caractérisé par le fait que** lesdites maltodextrines branchées sont présentes conjointement avec 0,5 à 98% en poids, et de préférence 5 à 98% en poids par rapport au poids total de l'aliment, d'au moins un polyol choisi dans le groupe constitué par le sorbitol, le maltitol, le xylitol, le mannitol, l'érythritol, le lactitol, l'isomaltulose hydrogéné, les sirops de glucose hydrogénés et les hydrolysats d'amidons hydrogénés.

7. Procédé selon l'une quelconque des revendications 1 à 6, **caractérisé par le fait que** lesdites maltodextrines branchées sont présentes conjointement avec 0,5 à 98% en poids, et de préférence 5 à 98% en poids, par rapport au poids total de l'aliment, d'au moins un sucre choisi dans le groupe constitué par le xylose, le fructose, le glucose, le polydextrose, le saccharose, le maltose, le lactose, l'isomaltose, les isomaltooligosaccharides, l'isomaltulose, les sirops de glucose, les sirops de glucose riches en fructose, les maltodextrines, les fructooligosaccharides et les galactooligosaccharides.

8. Procédé selon l'une quelconque des revendications 1 à 7, **caractérisé par le fait que** ledit aliment est choisi dans le groupe constitué par les biscuits, le chocolat, les substituts de repas, les sucres cuits, les gélifiés, les pâtes à mâcher, les chewing gums, les comprinés, les gommes, les lozenges, les confiseries de chocolat, les barres chocolatées, les boissons, les crèmes glacées, les pâtes à tartiner, les gâteaux, les produits de panification, les assaisonnements pour salade et les autres aliments renfermant habituellement des matières caloriques.

9. Aliment à valeur calorique réduite, dans lequel une partie, au plus 50% en poids, des matières grasses est remplacée par des maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, ledit aliment ayant des propriétés technologiques et organoleptiques comparables à un aliment traditionnel.

10. Aliment à valeur calorique réduite selon la revendication 9, dans lequel, en outre, une partie, au plus 75% en poids, des sucres et/ou tout ou partie des protéines est remplacée par des maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, ledit aliment ayant des propriétés technologiques et organoleptiques comparables à un aliment traditionnel.

11. Biscuit à valeur calorique réduite, dans lequel une partie, au plus 40% en poids, des matières grasses est remplacée par des maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, ledit biscuit ayant des propriétés technologiques et organoleptiques comparables à un biscuit traditionnel.

12. Biscuit à valeur calorique réduite, dans lequel une partie, au plus 40% en poids, du saccharose et une partie, au plus 40% en poids, des matières grasses sont remplacées par des maltodextrines branchées présentant entre 15 et 35% de liaisons glucosidiques 1→6, une teneur en sucres réducteurs inférieure à 20%, un indice de polymolécularité inférieur à 5 et une masse moléculaire moyenne en nombre Mn au plus égale à 4500 g/mole, ledit biscuit ayant des propriétés technologiques et organoleptiques comparables à un biscuit traditionnel.

## Claims

1. A process for preparing a food product with reduced calorific value **characterized in that** it comprises the step consisting in replacing part, at most 50% by weight, of the fat of the food product with branched maltodextrins having between 15 and 35% of 1->6 glucoside linkages, a reducing sugar content less than 20%, a polymolecularity index of less than 5 and a number-average molecular mass Mn at most equal to 4500 g/mol.

2. The process according to claim 1, **characterized in that** it further comprises the step consisting in replacing part, at most 75% by weight, of the sugars and/or all or part of the proteins of the food product with branched maltodextrins having between 15 and 35% of 1->6 glucoside linkages, a reducing sugar content less than 20%, a polymolecularity index of less than 5 and a number-average molecular mass Mn at most equal to 4500 g/mol.

3. The process according to claim 1 or 2, **characterized in that** said branched maltodextrins have a reducing sugar content between 2 and 5% and an Mn of between 2000 and 3000 g/mol.

4. The process according to any one of claims 1 to 3, **characterized in that** all or some of the branched maltodextrins are hydrogenated.

5. The process according to any one of claims 1 to 3, **characterized in that** said branched maltodextrins are present in a proportion of 0.1 to 30% by weight, and preferably present in a proportion of 1.0 to 10% by weight, relative to the total weight of the food.

6. The process according to any one of claims 1 to 5, **characterized in that** said branched maltodextrins are simultaneously present with 0.5 to 98% by weight, and preferably present with 5 to 98% by weight, relative to the total weight of the food, of at least one polyol selected from the group consisting of sorbitol, maltitol, xylitol, mannitol, erythritol, lactitol, hydrogenated isomaltulose, hydrogenated glucose syrups and hydrogenated starch hydrolysates.

7. The process according to any one of claims 1 to 6, **characterized in that** said branched maltodextrins are simultaneously present with 0.5 to 98% by weight, and preferably present with 5 to 98% by weight, relative to the total weight of the food, of at least one sugar selected from the group consisting of xylose, fructose, glucose, polydextrose, sucrose, maltose, lactose, isomaltose, isomalto-oligosacccharides, isomaltulose, glucose syrups, high-fructose glucose syrups, maltodextrins, fructooligosaccharides and galactooligosaccharides.

8. The process according to any one of claims 1 to 7, **characterized in that** said food is selected from the group consisting of biscuits, chocolate, meal replacers, cooked sweets, jelly sweets, chewy pastes, chewing gums, tablets, gums, lozenges, chocolate confectioneries, chocolate bars, drinks, ice creams, spreads, cakes, bakery products, salad dressings and other foods usually containing high-calorie substances.

9. A food product with a reduced calorific value, in which part, at most 50% by weight, of the fat is replaced with branched maltodextrins having between 15 and 35% of 1->6 glucoside linkages, a reducing sugar content of less than 20%, a polymolecularity index of less than 5 and a number-average molecular mass Mn at most equal to 4500 g/mol, said food product having technological and organoleptic properties comparable to a traditional food product.

10. A food product with a reduced calorific value according to claim 9, in which part, at most 75% by weight of the sugars and/or all or part of the proteins are replaced with branched maltodextrins having between 15 and 35% of 1->6 glucoside linkages, a reducing sugar content of less than 20%, a polymolecularity index of less than 5 and a number-average molecular mass Mn at most equal to 4500 g/mol, said food product having technological and organoleptic properties comparable to a traditional food product.

11. A biscuit with a reduced calorific value, in which part, at most 40% by weight, of the fat is replaced by branched maltodextrins representing between 15 and 35% of 1->6 glucoside linkages, a reducing sugar content of less than 20%, a polymolecularity index of less than 5 and a number-average molecular mass Mn at most equal to 4500 g/mol, said biscuit having technological and organoleptic properties comparable to a traditional biscuit.

12. A biscuit with a reduced calorific value, in which part, at most 40% by weight, of the sucrose and part, at most 40% by weight, of the fat are replaced by branched maltodextrins representing between 15 and 35% of 1->6 glucoside linkages, a reducing sugar content of less than 20%, a polymolecularity index of less than 5 and a number-average molecular mass Mn at most equal to 4500 g/mol, said biscuit having technological and organoleptic properties comparable to a traditional biscuit.

## Patentansprüche

1. Verfahren zur Herstellung eines Nahrungsmittels mit reduziertem Kaloriengehalt, **dadurch gekennzeichnet, dass** es den Schritt umfasst, der im teilweisen Ersetzen von höchstens 50 Gew.-% der Fette des Nahrungsmittels besteht, durch eine zur Reduzierung des Kaloriengehalt wirksame Menge an verzweigten Maltodextrinen, die zwischen 15 und 35 % 1→6-glykosidische Bindungen, einen Gehalt an reduzierenden Zuckern von weniger als 20 %, einen Polymolekularitätsindex von weniger als 5 und ein Zahlenmittel-Molekulargewicht Mn von höchstens gleich 4500 g/mol aufweisen.

2. Verfahren gemäß Anspruch 1, **dadurch gekennzeichnet, dass** es außerdem den Schritt umfasst, der im teilweisen Ersetzen von höchstens 75 Gew.-% der Zucker und/oder aller oder einem Teil der Proteine des Nahrungsmittels besteht, durch eine zur Reduzierung des Kaloriengehalt wirksame Menge an verzweigten Maltodextrinen, die zwischen 15 und 35 % an 1→6-glykosidische Bindungen, einen Gehalt an reduzierenden Zuckern von weniger als 20 %, einen Polymolekularitätsindex von weniger als 5 und ein Zahlenmittel-Molekulargewicht Mn von höchstens gleich 4500 g/mol aufweisen.

3. Verfahren gemäß Anspruch 1 oder 2, **dadurch gekennzeichnet, dass** die verzweigten Maltodextrine einen Gehalt an reduzierenden Zuckern, der zwischen 2 und 5 % liegt, und ein Mn, das zwischen 2000 und 3000 g/mol liegt, aufweisen.

4. Verfahren gemäß einem der Ansprüche 1 bis 3, **dadurch gekennzeichnet, dass** alle oder ein Teil der verzweigten Maltodextrine hydriert sind.

5. Verfahren gemäß einem der Ansprüche 1 bis 3, **dadurch gekennzeichnet, dass** die verzweigten Maltodextrine in einem Anteil von 0,1 bis 30 Gew.-% und vorzugsweise von 1,0 bis 10 Gew.-% bezüglich des Gesamtgewichts des Nahrungsmittels vorliegen.

6. Verfahren gemäß einem der Ansprüche 1 bis 5, **dadurch gekennzeichnet, dass** die verzweigten Maltodextrine zusammen mit 0,5 bis 98 Gew.-% und vorzugweise 5 bis 98 Gew.-%, bezüglich des Gesamtgewichts des Nahrungsmittels, an mindestens einem Polyol vorliegen, das ausgewählt ist aus der Gruppe bestehend aus Sorbit, Maltit, Xylit, Mannit, Erythrit, Laktit, hydrierter Isomaltulose, hydrierten Glukosesirupen und Hydrolysaten hydrierter Stärken.

7. Verfahren gemäß einem der Ansprüche 1 bis 6, **dadurch gekennzeichnet, dass** die verzweigten Maltodextrine zusammen mit 0,5 bis 98 Gew.-% und vorzugsweise 5 bis 98 Gew.-%, bezüglich des Gesamtgewichts des Nahrungsmittels, an mindestens einem Zucker vorliegen, der ausgewählt ist aus der Gruppe bestehend aus Xylose, Fruktose, Glukose, Polydextrose, Saccharose, Maltose, Laktose, Isomaltose, Isomaltooligosacchariden, Isomaltulose, Glukosesirupen, Fruktose-reichen Glukosesirupen, Maltodextrinen, Fruktooligosacchariden und Galaktooligosacchariden.

8. Verfahren gemäß einem der Ansprüche 1 bis 7, **dadurch gekennzeichnet, dass** das Nahrungsmittel ausgewählt ist aus der Gruppe bestehend aus Backwerken, Schokolade, Ersatzmahlzeiten, gekochten Zuckern, Geliermitteln, Kaubonbons, Kaugummis, Drops, Gummis, Bonbons, Schokoladensüßwaren, Schokoriegeln, Getränken, Eiscremes, Streichpasten, Kuchen, Brotwaren, Würzmitteln für Salat und anderen Nahrungsmitteln, die üblicherweise in kalorienhaltigen Waren enthalten sind.

9. Nahrungsmittel mit reduziertem Kaloriengehalt, in dem ein Teil von höchstens 50 Gew.-% der Fette durch verzweigte Maltodextrine ersetzt ist, welche zwischen 15 und 35 % 1→6-glykosidische Bindungen, einen Gehalt an reduzierenden Zuckern von weniger als 20 %, einen Polymolekularitätsindex von weniger als 5 und ein Zahlenmittel-Molekulargewicht Mn von höchstens gleich 4500 g/mol aufweisen, wobei das Nahrungsmittel technologische und organoleptische Eigenschaften besitzt, die mit einem herkömmlichen Nahrungsmittel vergleichbar sind.

10. Nahrungsmittel mit reduziertem Kaloriengehalt gemäß Anspruch 9, in dem außerdem ein Teil von höchstens 75 Gew.-% der Zucker und/oder alle oder ein Teil der Proteine durch verzweigte Maltodextrine ersetzt ist, welche zwischen 15 und 35 % 1 → 6-glykosidische Bindungen, einen Gehalt an reduzierenden Zuckern von weniger als 20 %, einen Polymolekularitätsindex von weniger als 5 und ein Zahlenmittel-Molekulargewicht Mn von höchstens gleich 4500 g/mol aufweisen, wobei das Nahrungsmittel technologische und organoleptische Eigenschaften besitzt, die mit einem herkömmlichen Nahrungsmittel vergleichbar sind.

11. Backwerk mit reduziertem Kaloriengehalt, in dem ein Teil von höchstens 40 Gew.-% der Fette durch verzweigte Maltodextrine ersetzt ist, welche zwischen 15 und 35 % 1→6-glykosidische Bindungen, einen Gehalt an reduzierenden Zuckern von weniger als 20 %, einen Polymolekularitätsindex von weniger als 5 und ein Zahlenmittel-Molekulargewicht Mn von höchstens gleich 4500 g/mol aufweisen, wobei das Nahrungsmittel technologische und organoleptische Eigenschaften besitzt, die mit einem herkömmlichen Nahrungsmittel vergleichbar sind.

12. Backwerk mit reduziertem Kaloriengehalt, in dem ein Teil von höchstens 40 Gew.-% der Saccharose und ein Teil von höchstens 40 Gew.-% der Fette durch verzweigte Maltodextrine ersetzt sind, welche zwischen 15 und 35 % 1→6-glykosidische Bindungen, einen Gehalt an reduzierenden Zuckern von weniger als 20 %, einen Polymolekularitätsindex von weniger als 5 und ein Zahlenmittel-Molekulargewicht Mn von höchstens gleich 4500 g/mol aufweisen, wobei das Nahrungsmittel technologische und organoleptische Eigenschaften besitzt, die mit einem herkömmlichen Nahrungsmittel vergleichbar sind.
